# FASCICULE DE BREVET EUROPEEN

(11) **EP 3 187 795 B1**
(45) Date de publication et mention de la délivrance du brevet: **22.05.2019**
(21) Numéro de dépôt: 16205544.6
(22) Date de dépôt: 20.12.2016
(51) Int. Cl.: F24H 1/28, F24H 8/00, F24H 9/00

(54) **CHAUDIÈRE À CONDENSATION À DOUBLE RETOUR**
KONDENSATIONSHEIZKESSEL MIT DOPPELTER RÜCKFÜHRUNG
CONDENSATION BOILER WITH DOUBLE RETURN

(30) Priorité: 28.12.2015 FR 1563398
(43) Date de publication de la demande: 05.07.2017
(73) Titulaire: BDR Thermea Group, 67580 Mertzwiller (FR)
(72) Inventeur: KEUSCH, Jean-Jacques, 67240 SCHIRRHOFFEN (FR)
(74) Mandataire: Littolff, Denis

(56) Documents cités:
- DE-A1- 3 508 272
- DE-A1- 3 508 273
- DE-U1-202004 008 763
- FR-A1- 2 565 334

## Description

La présente invention a trait aux chaudières à condensation, qui présentent la particularité d'utiliser également l'énergie latente de changement de phase dégagée par la condensation des fumées produites au cours de la combustion. En d'autres termes, ce type de chaudière produit de l'énergie thermique non seulement à partir de la simple combustion qui est mise en oeuvre lorsque le combustible est brûlé, comme c'est le cas pour les chaudières classiques, mais également l'énergie latente contenue dans les fumées, qui présentent une température plus élevée que celle de l'air de combustion. Le document FR 2 565 334 A1 divulgue le préambule de la revendication 1.

L'énergie thermique générée dans la chaudière, quelle que soit son origine, est transférée via un échangeur à un moyen caloporteur, un fluide qui est en général de l'eau lorsque la chaudière est destinée au chauffage de locaux comme c'est le cas dans l'exemple qui sera illustré dans la suite. Le fluide caloporteur véhicule alors et de manière connue l'énergie thermique par l'intermédiaire d'un circuit de conduits déployés dans un espace équipé d'installations aptes à la distribuer, par exemple des radiateurs muraux ou des systèmes de chauffage par le sol.

Les chaudières concernées par l'invention comportent classiquement un brûleur alimenté par exemple en fuel domestique, en gaz naturel ou en GPL, dont la réaction de combustion dans l'air est exothermique et génère des fumées. Ces fumées sont principalement constituées de vapeur d'eau, dont le passage de l'état gazeux à l'état liquide lors d'un refroidissement entraîne une restitution d'énergie sous forme de chaleur latente de condensation. Cette énergie est perdue dans les chaudières simples, et récupérée dans les chaudières à condensation qui font l'objet de l'invention.

La récupération de cette énergie latente passe donc par un abaissement de la température des fumées, pour bénéficier de la phase de transformation de la vapeur d'eau en eau liquide. La température à atteindre doit être inférieure à la température dite de « rosée », qui est la température à partir de laquelle la vapeur d'eau des fumées commence à se condenser. Cette température dépend en pratique des conditions de la combustion et notamment de la nature du combustible. A titre d'exemple, la température de rosée d'un fuel domestique avec un C0₂ de 13% est de l'ordre de 47°C.

Dans la chaudière, l'abaissement des températures se fait dans l'échangeur et, compte tenu de l'ordre de grandeur précité des températures de rosée et pour obtenir les meilleurs rendements, il est préférable d'avoir une température de liquide caloporteur, en retour du circuit de chauffage, qui soit la plus basse possible. Ce type de chaudière à condensation est donc en théorie plus adapté à des installations de chauffage qui retournent de l'eau à basse température, ce qui renvoie à une condition amont tenant à la nature de ces installations et à leur adéquation à une solution technique impliquant une condensation. Ainsi, des installations comportant par exemple des émetteurs de chaleur fonctionnant à basse température, comme c'est le cas dans les chauffages au sol, sont plus naturellement appropriées à un usage avec une chaudière à condensation, si l'on veut tirer le meilleur parti de ces dernières et les faire travailler à rendement correct.

Or, il existe des installations de chauffage qui regroupent des radiateurs muraux classiques, retournant bien souvent une eau à température peu adaptée à une chaudière à condensation car trop élevée, et des moyens de chauffage au sol. Les deux circuits se développent en parallèle, un embranchement étant prévu en aval du conduit de départ au niveau de la chaudière. La température de retour du circuit de chauffage au sol est en principe la seule, dans ce cas, à être appropriée à un système de récupération de l'énergie de condensation au niveau de la chaudière.

Dans une telle hypothèse de double circuit, l'utilisation d'une chaudière classique n'est pas satisfaisante car elle ne répond pas optimalement, en termes de rendement énergétique, aux besoins de chauffage de la fraction du liquide caloporteur qui est utilisé dans le circuit de chauffage au sol. Si c'est une chaudière à condensation qui est privilégiée, c'est au tour de l'eau retournée par le circuit de chauffage par radiateurs classiques de ne pas être à une température permettant un fonctionnement optimal de la chaudière, dont l'utilisation se fait alors également au détriment du rendement global.

L'invention propose une solution à ce problème, sous la forme d'une unique chaudière qui permet le traitement en parallèle d'eau retournée à deux températures distinctes, par exemple issues d'une part d'un premier circuit de type chauffage à éléments de chauffage muraux et d'autre part d'un second circuit de type chauffage au sol dont la température de fonctionnement est sensiblement inférieure à celle qui est nécessaire pour le premier circuit. Cette chaudière est conçue pour optimiser le rendement de chaque opération de chauffage, dans l'échangeur, des liquides caloporteurs arrivant à des températures différentes.

A cet effet, la chaudière de l'invention, qui est bien une chaudière à condensation, comporte classiquement un corps de chauffe avec une chambre de combustion centrale dotée d'un brûleur et entourée d'un échangeur constitué d'un volume périphérique logeant en l'occurrence une double rangée de tubulures d'évacuation des fumées, constituant le primaire de l'échangeur. Les tubulures d'une première rangée intérieure communiquent avec la chambre de combustion et avec les tubulures d'une seconde rangée extérieure, elles-mêmes reliées à une cheminée d'échappement. Par ailleurs, comme dans toutes les chaudières de ce type, au moins un conduit de départ et au moins un conduit de retour de fluide caloporteur débouchent en partie haute et en partie basse du volume périphérique, constituant le secondaire de l'échangeur.

Selon l'invention, la chaudière comporte un conduit additionnel de retour de fluide caloporteur débouchant entre les deux rangées de tubulures et, dans la hauteur du volume périphérique, entre le ou les conduit(s) de départ et le ou les conduit(s) de retour.

Le raccordement du circuit de chauffage avec radiateurs classiques s'effectue par le conduit additionnel de retour, alors que la connexion à la chaudière du circuit de chauffage au sol s'effectue par le conduit de retour initial, ou conduit de retour direct, puisqu'il contient la température de retour la plus froide. Les performances de la chaudière de l'invention sont ainsi optimisées puisqu'un tel raccordement plus froid est de nature à favoriser la condensation et qu'il s'applique à la totalité de l'échangeur.

Selon une configuration préférentielle, le conduit additionnel débouche sensiblement à mi-hauteur du corps de chauffe, sensiblement à mi-chemin des conduits de départ et de retour de fluide caloporteur. Il faut que le positionnement du conduit additionnel permettant le retour du fluide le plus chaud ne perturbe pas, ou en tout cas le moins possible, le refroidissement du fluide plus froid issu du conduit de retour de fluide direct, pour ne pas impacter les performances de l'échangeur de chaleur.

Dans l'échangeur tel qu'existant dans la chaudière de l'invention, et qui sera plus apparent lorsqu'il sera expliqué en référence aux figures, il existe un gradient de température vertical, envisagé selon l'axe vertical du corps de chauffe, et un gradient de température horizontal, c'est-à-dire un gradient radial lié à la géométrie circulaire du corps de la chaudière. En d'autres termes, la température décroît verticalement, et du centre vers la périphérie.

Pour éviter que le flux de liquide plus chaud issu du conduit de retour additionnel ne perturbe la partie basse de l'échangeur en contact avec l'eau de retour la plus froide, une première paroi de séparation périphérique est placée entre les tubulures de la première rangée intérieure et les tubulures de la seconde rangée extérieure, au niveau du débouché du conduit additionnel qui la traverse et sur une hauteur prédéterminée. Dans le même but, une seconde paroi de séparation périphérique est disposée au-dessus du fond du corps de chauffe, à proximité de la paroi externe de fond, au niveau du débouché du conduit de retour direct.

Pour garantir une bonne irrigation du corps de chauffe, et notamment éviter ce qu'il est convenu d'appeler des points chauds, susceptibles d'engendrer des bruits de bouillonnements, des déflecteurs ont de plus été prévus, selon l'invention. Ainsi, pour optimiser l'irrigation de la zone se trouvant à proximité de la paroi de la chambre de combustion, un premier déflecteur de guidage du fluide caloporteur vers le ou les conduits de départ est placé en partie supérieure du corps de chauffe, à proximité et sous le ou les conduits de départ.

Selon une configuration possible, ledit premier déflecteur peut prendre la forme d'une plaque annulaire s'étendant horizontalement entre la paroi externe du corps de chauffe et la seconde rangée de tubulures.

Un second déflecteur de guidage, cette fois du fluide caloporteur en sortie du ou des conduit(s) direct(s) de retour, est placé en partie inférieure du corps de chauffe à proximité et sur ledit ou lesdits conduit(s) de retour. Ce second déflecteur est de préférence une plaque d'allure horizontale surmontant chaque zone d'arrivée de fluide caloporteur.

D'autres caractéristiques et avantages de la présente invention apparaîtront à la lecture de la description détaillée qui va suivre, qui se rapporte à un exemple de réalisation donné à titre indicatif et non limitatif. Cet exemple particulier de configuration est décrit en référence aux figures jointes, pour lesquelles :
- la figure 1 représente une chaudière de l'invention en vue en coupe médiane axiale ;
- la figure 2 montre en vue perspective le corps de chauffe de la chaudière de la figure 1 avec ses conduits de départ d'une part, et de retour direct et additionnel d'autre part ; et
- la figure 3 est une vue similaire à la précédente, figurant en vue perspective le corps de chauffe d'une chaudière de l'invention sans sa paroi périphérique extérieure, montrant par conséquent l'échangeur et ses tubulures primaires.

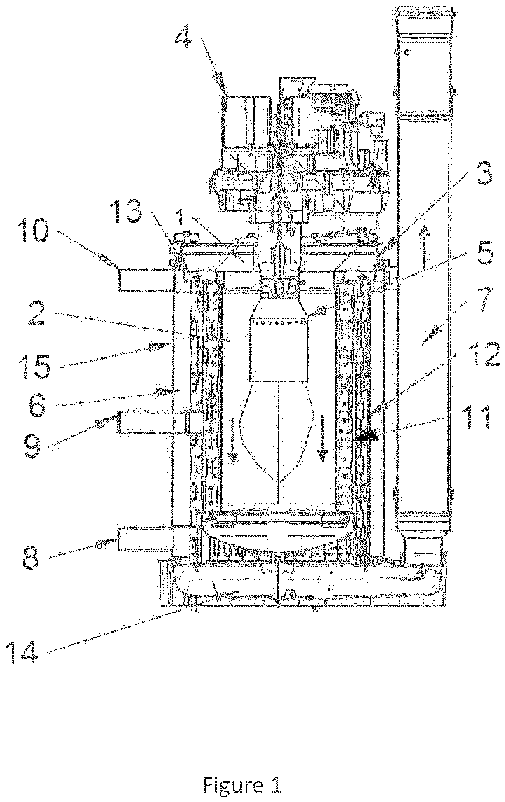

En référence à ces figures 1 à 3, la chaudière 1 comprend un corps de chauffe 2 doté d'un couvercle 3 et d'un bloc brûleur 4 surmontant le couvercle 3. Le corps de chauffe 2 comporte une chambre de combustions centrale 5 dans laquelle le brûleur proprement dit (non apparent) est plongé, un échangeur périphérique 6, une cheminée d'échappement 7 des fumées produites au cours de la combustion, et des conduits de retour 8, 9 et de départ 10 du fluide caloporteur traversant la paroi externe 15 du corps de chauffe 2. Entre ces conduits de retour 8, 9 et de départ 10, le liquide caloporteur passe dans le secondaire de l'échangeur 6. Ce dernier comporte par ailleurs deux rangées de tubulures périphériques par lesquelles passent les fumées en cours d'échappement, une première rangée intérieure de tubulures 11 et une seconde rangée extérieure de tubulures 12 constituant ensemble le primaire de l'échangeur 6. Les fumées produites par la réaction de combustion suivent en réalité le trajet indiqué par les flèches. Elles sont évacuées de la chambre de combustion par en bas, parcourent vers le haut les tubulures 11 de la première rangée intérieure, débouchent dans une chambre supérieure 13 annulaire, franchissent les tubulures 12 de la seconde rangée extérieure et s'échappent finalement par une chambre de collecte inférieure 14 donnant sur la cheminée 7 d'allure verticale.

Le fluide caloporteur, en l'espèce de l'eau issue et à destination des circuits de chauffage, empreinte le conduit de départ 10, est ensuite distribué dans les différents moyens de chauffage constituant deux branches distinctes - par exemple respectivement de chauffage au sol et de chauffage de type mural - dans l'exemple particulier commenté en référence aux figures. Le fluide revient par deux conduits, un conduit de retour 8 dit direct qui véhicule le fluide retourné ayant la température la plus basse, typiquement issu du circuit de chauffage au sol, et un conduit de retour additionnel 9 transportant le fluide de température plus élevée, en principe en provenance du circuit de chauffage à radiateurs muraux ou du circuit primaire d'un préparateur d'eau chaude sanitaire.

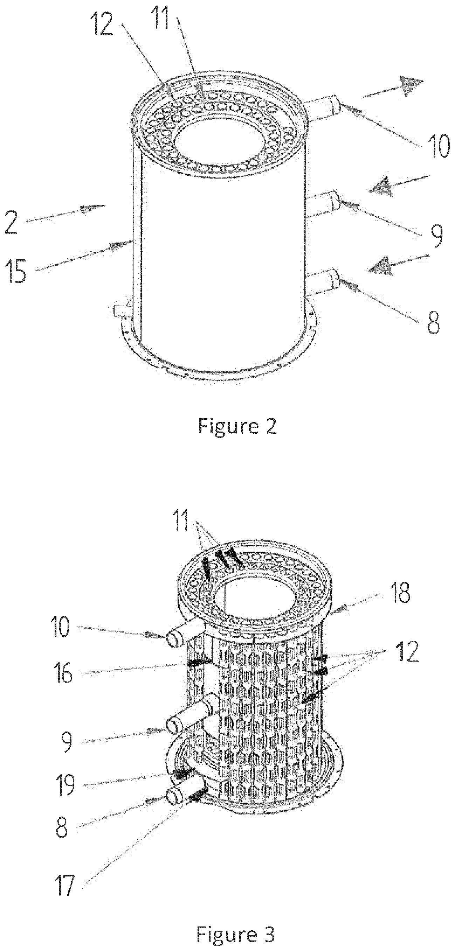

La figure 3 montre le corps de chauffe sans sa paroi périphérique externe 15, c'est-à-dire que les tubulures 11, 12 des rangées respectivement intérieure et extérieure son apparentes, de même que la première paroi de séparation 16 périphérique et la seconde paroi de séparation 17 localisée à proximité du fond du corps de chauffe 2. Cette vue laisse de plus apparaître le premier déflecteur de guidage 18, une plaque de forme annulaire périphérique, et le second déflecteur de guidage 19 en sortie du conduit de retour direct 8, placé au-dessus du débouché dudit conduit 8.

Des tests ont été effectués sur deux configurations de chaudières, respectivement pourvue et dépourvue d'un conduit de retour additionnel 9, en vue de déterminer le gain dû à ce conduit additionnel 9 dans les performances de l'échangeur de chaleur 6. Des essais à différents débits et à plusieurs températures de retour par le conduit direct 8 ont été réalisés, qui suggèrent que le gain en performance est de l'ordre de 2% à 4% pour une chaudière fioul et de 4 à 6% pour une chaudière gaz, en présence du conduit de retour additionnel 9, sur le rendement utile global de la chaudière.

L'exemple illustré par les figures ne peut être considéré comme exhaustif de l'invention, qui englobe au contraire les variantes de forme et de conception notamment des déflecteurs et moyens de séparation, comme défini dans les revendications.

## Revendications

1. Chaudière à condensation (1) comportant un corps de chauffe (2) avec une chambre de combustion centrale (5) dotée d'un brûleur (4) et entourée d'un échangeur (6) constitué d'un volume périphérique logeant une double rangée de tubulures (11, 12) d'évacuation des fumées constituant le primaire de l'échangeur (6), les tubulures (11) d'une première rangée intérieure communiquant avec la chambre de combustion (5) et avec les tubulures (12) d'une seconde rangée extérieure reliées à une cheminée d'échappement (7), au moins un conduit de départ (10) et au moins un conduit de retour (8) de fluide caloporteur débouchant en partie haute et en partie basse du volume périphérique et constituant le secondaire de l'échangeur (6), **caractérisée en ce qu'**elle comporte un conduit additionnel (9) de retour de fluide caloporteur débouchant entre les deux rangées de tubulures (11, 12) et, dans la hauteur du volume périphérique, entre le ou les conduit(s) de départ (10) et le ou les conduit(s) de retour (8).

2. Chaudière à condensation (1) selon la revendication précédente, **caractérisée en ce que** le conduit additionnel (9) débouche sensiblement à mi-hauteur du corps de chauffe (2).

3. Chaudière à condensation (1) selon l'une des revendications précédentes, **caractérisée en ce qu'**une première paroi de séparation (16) périphérique est placée entre les tubulures (11) de la première rangée intérieure et les tubulures (12) de la seconde rangée extérieure, au niveau du débouché du conduit additionnel (9) qui la traverse et sur une hauteur prédéterminée.

4. Chaudière à condensation (1) selon la revendication précédente, **caractérisée en ce qu'**une seconde paroi de séparation (17) périphérique est disposée au-dessus du fond du corps de chauffe (2), au niveau du débouché du conduit de retour (9).

5. Chaudière à condensation (1) selon l'une des revendications précédentes, **caractérisée en ce qu'**un premier déflecteur (18) de guidage du fluide caloporteur vers le ou les conduits de départ (10) est placé en partie supérieure du corps de chauffe (2), à proximité et sous le ou les conduits de départ (10).

6. Chaudière à condensation (1) selon la revendication précédente, **caractérisée en ce que** ledit premier déflecteur (18) est une plaque annulaire s'étendant horizontalement entre la paroi externe (15) du corps de chauffe (2) et la seconde rangée de tubulures (12).

7. Chaudière à condensation (1) selon l'une des revendications précédentes, **caractérisée en ce qu'**un second déflecteur (19) de guidage du fluide caloporteur en sortie du ou des conduits de retour (8) est placé en partie inférieure du corps de chauffe (2) à proximité et sur le ou les conduits de retour (8).

8. Chaudière à condensation (1) selon la revendication précédente, **caractérisée en ce que** ledit second déflecteur (19) est une plaque d'allure horizontale surmontant chaque zone d'arrivée de fluide caloporteur.

## Patentansprüche

1. Kondensationsheizkessel (1), umfassend einen Heizkörper (2) mit einer zentralen Brennkammer (5), die mit einem Brenner (4) dotiert und von einem Tauscher (6) umgeben ist, der aus einem Umfangsvolumen besteht, das eine doppelte Reihe von Stutzen (11, 12) zur Ableitung der Dämpfe aufnimmt, die den ersten Tauscher (6) darstellen, wobei die Stutzen (11) einer ersten inneren Reihe mit der Brennkammer (5) und mit den Stutzen (12) einer zweiten äußeren Reihe kommunizieren, die mit einem Auspuffkamin (7) verbunden ist, mindestens einen Ausgangskanal (10) und mindestens einen Kanal zur Rückführung (8) von Wärmeträgerfluid, der am oberen Teil und am unteren Teil des Umfangsvolumens mündet und den zweiten Tauscher (6) darstellt, **dadurch gekennzeichnet, dass** er einen zusätzlichen Kanal (9) zur Rückführung von Wärmeträgerfluid umfasst, der zwischen den zwei Reihen von Stutzen (11, 12) und auf der Höhe des Umfangsvolumens zwischen dem oder den Ausgangskanal/Ausgangskanälen (10) und dem oder den Kanal/Kanälen zur Rückführung (8) mündet.

2. Kondensationsheizkessel (1) nach dem vorhergehenden Anspruch, **dadurch gekennzeichnet, dass** der zusätzliche Kanal (9) im Wesentlichen auf halber Höhe des Heizkörpers (2) mündet.

3. Kondensationsheizkessel (1) nach einem der vorhergehenden Ansprüche, **dadurch gekennzeichnet, dass** eine erste Umfangstrennwand (16) zwischen den Stutzen (11) der ersten inneren Reihe und den Stutzen (12) einer zweiten äußeren Reihe auf dem Niveau der Mündung des zusätzlichen Kanals (9), der sie quert, und auf einer vorbestimmten Höhe platziert ist.

4. Kondensationsheizkessel (1) nach dem vorhergehenden Anspruch, **dadurch gekennzeichnet, dass** eine zweite Umfangstrennwand (17) über dem Boden des Heizkörpers (2) auf dem Niveau der Mündung des Kanals zur Rückführung (9) angebracht ist.

5. Kondensationsheizkessel (1) nach einem der vorhergehenden Ansprüche, **dadurch gekennzeichnet, dass** ein erster Deflektor (18) zur Führung des Wärmeträgerfluids hin zu dem oder den Ausgangskanal/Ausgangskanälen (10) im oberen Teil des Heizkörpers (2) in der Nähe und unter dem oder den Ausgangskanal/Ausgangskanälen (10) platziert ist.

6. Kondensationsheizkessel (1) nach dem vorhergehenden Anspruch, **dadurch gekennzeichnet, dass** der erste Deflektor (18) eine ringförmige Platte ist, die sich horizontal zwischen der äußeren Wand (15) des Heizkörpers (2) und der zweiten Reihe von Stutzen (12) erstreckt.

7. Kondensationsheizkessel (1) nach einem der vorhergehenden Ansprüche, **dadurch gekennzeichnet, dass** ein zweiter Deflektor (19) zur Führung des Wärmeträgerfluids am Ausgang des oder der Rückführungskanals/Rückführungskanäle (8) im unteren Teil des Heizkörpers (2), in der Nähe und auf dem oder den Rückführungskanal/Rückführungskanälen (8) platziert ist.

8. Kondensationsheizkessel (1) nach dem vorhergehenden Anspruch, **dadurch gekennzeichnet, dass** der zweite Reflektor (19) eine Platte mit horizontalem Aussehen ist, die jeden Ankunftsbereich von Wärmeträgerfluid übersteigt.

## Claims

1. A condensation boiler (1) including a heating body (2) with a central combustion chamber (5) provided with a burner (4) and surrounded by an exchanger (6) made up of a peripheral volume housing a double row of tubings (11, 12) for discharging fumes making up the primary of the exchanger (6), the tubings (11) of an inner first row communicating with the combustion chamber (5) and with the tubings (12) of an outer second row connected to an exhaust chimney (7), at least one outlet duct (10) and at least one heat transfer fluid return duct (8) emerging in the upper part and the lower part of the peripheral volume and making up the secondary of the exchanger (6), **characterized in that** it includes an additional heat transfer fluid return duct (9) emerging between the two rows of tubings (11, 12) and, in the height of the peripheral volume, between the outlet duct (10) and the return duct(s) (8).

2. The condensation boiler (1) according to the preceding claim, **characterized in that** the additional duct (9) emerges substantially at mid-height of the heating body (2).

3. The condensation boiler (1) according to one of the preceding claims, **characterized in that** a first peripheral separating wall (16) is placed between the tubings (11) of the inner first row and the tubings (12) of the outer second row, at the outlet of the additional duct (9) that passes through it and over a predetermined height.

4. The condensation boiler (1) according to the preceding claim, **characterized in that** a second peripheral separating wall (17) is positioned above the bottom of the heating body (2), at the outlet of the return duct (9).

5. The condensation boiler (1) according to one of the preceding claims, **characterized in that** a first deflector (18) for guiding the heat transfer fluid toward the outlet duct(s) (10) is placed in the upper part of the heating body (2), near and below the outlet duct(s) (10).

6. The condensation boiler (1) according to the preceding claim, **characterized in that** said first deflector (18) is an annular plate extending horizontally between the outer wall (15) of the heating body (2) and the second row of tubings (12).

7. The condensation boiler (1) according to one of the preceding claims, **characterized in that** a second deflector (19) for guiding the heat transfer fluid at the outlet of the return duct(s) (8) is placed in the lower part of the heating body (2) near and on the return duct(s) (8).

8. The condensation boiler (1) according to the preceding claim, **characterized in that** said second deflector (19) is a horizontal plate topping each heat transfer fluid intake zone.
